# EUROPÄISCHE PATENTSCHRIFT

(11) **EP 1 023 846 B1**
(45) Veröffentlichungstag und Bekanntmachung des Hinweises auf die Patenterteilung: **04.12.2002**
(21) Anmeldenummer: 00101133.7
(22) Anmeldetag: 21.01.2000
(51) Int. Cl.: A41D 19/015, A41F 1/06

(54) **Schutzhandschuh**
Protective glove
Gant de protection

(30) Priorität: 29.01.1999 DE 29901502 U
(43) Veröffentlichungstag der Anmeldung: 02.08.2000
(73) Patentinhaber: Schlachthausfreund Fabrikations- u. Vertriebs-GmbH, 21256 Handeloh-Höckel (DE)
(72) Erfinder: Baden, Willi, 21256 Handeloh-Höckel (DE)
(74) Vertreter: Liebelt, Rolf

(56) Entgegenhaltungen:
- WO-A-95/30346
- FR-A- 2 748 908
- GB-A- 191 013 803
- US-A- 4 750 218
- US-A- 4 843 650

## Beschreibung

Die Erfindung betrifft einen Schutzhandschuh, der aus einem vorzugsweise metallischen Ringgeflecht besteht und im Handgelenkbereich einen vom Schlupfloch ausgehenden sowie sich in Richtung zu den Fingern erstreckenden Schlitz aufweist, der von einem Schließband überbrückt wird, dessen eines Ende am Handschuh befestigt und dessen anderes Ende lösbar mit der Außenoder Oberseite des Handschuhes verbindbar ist (Siehe z.B. Dokument FR-A-2 748 908).

Derartige Schutzhandschuhe werden z. B. von Metzgern getragen, um sich gegen Hieb-, Stich- und Schnittverletzungen zu schützen. Metallringgeflechte für solche Schutzhandschuhe sind üblicherweise so aufgebaut, daß in ihnen (von Nähten und Rändern abgesehen) jeder Ring mit vier benachbarten Ringen verkettet ist. Solche Metallringgeflechte sind hoch flexibel und erhalten der Hand, die sie schützen sollen, ihre Beweglichkeit. Die hohe Flexibilität des Metallringgeflechtes hat jedoch den Nachteil, daß ein solcher Handschuh im Gegensatz zu einem Handschuh aus Leder oder aus einem texilen Gewebe leicht von der Hand herunterrutscht, wenn er nicht am Handgelenk festgebunden wird. Die Handschuhe sind deshalb am Handgelenk mit einem Schließband versehen, welches einen im Handgelenksbereich bei Handschuhen häufig vorgesehenen Schlitz überbrückt, der das Anziehen und Ausziehen des Handschuhs und ein faltenfreies Schließen erleichtert.

Die Schließbänder werden üblicherweise aus einem thermoplastischen Gewebe, z. B. aus Polyamid, hergestellt und sind mit einem Ende mit dem Ringgeflecht des Handschuhes verschweißt oder vernäht. Diese Gewebebänder sind mit einer an sich bekannten Druckknopfmechanik ausgestattet, um den Handschuh zu verschließen und am Handgelenk zu halten. Sind die Bänder verschlissen, müssen die Handschuhe entweder weggeworfen oder zum Hersteller gesandt werden, um neue Bänder anbringen zu lassen. Dies ist jedoch bei an das Metallringgeflecht angeschweißten oder angespritzten Bändern nicht leicht.

Zur Behebung dieser Schwierigkeiten sind derartige Schutzhandschuhe auch mit auswechselbaren Schließbändern aus Kunststoff ausgerüstet worden. Zu diesem Zweck ist in das Ringgeflecht im Bereich des Handgelenkes ein Schlitz oder eine Schlaufe eingearbeitet, durch die das Schließband hindurchgezogen werden kann. Die Ausbildung des Schlitzes oder der Schlaufe ist aufwendig.

Aufgabe der Erfindung ist es nun, einen Schutzhandschuh aus Ringgeflecht mit auswechselbarem Schließband kostengünstig zur Verfügung zu stellen.

Diese Aufgabe wird erfindungsgemäß ausgehend von einem Schutzhandschuh der eingangs beschriebenen Art mit einem Zwischenstück gelöst, das fest am Handschuh angebracht und an dem das am Handschuh zu befestigende Ende des Schließbandes austauschbar gehalten ist.

Mit dem nach der Erfindung vorzugsweise mit Ringen am Geflecht des Schutzhandschuhes angebrachten Zwischenstück aus Metall und/oder Kunststoff wird ein Element erhalten, das ohne aufwendige Maßnahmen im Handschuhgeflecht das Auswechseln des Schließbandes ermöglicht; denn es ist hierbei nur erforderlich, das Schließband vom Zwischenstück zu lösen und durch ein anderes zu ersetzen. Hierzu kann das Zwischenstück mindestens eine Bohrung als Aufnahme für einen Niet oder eine Schraube, die sich durch das zu befestigende Ende des Schließbandes erstreckt, aufweisen.

Bei einer anderen Ausgestaltung der Erfindung weist das freie Ende des Zwischenstückes eine Umbiegung mit einem Schlitz auf, durch welchen das Schließband, dessen am Handschuh zu befestigendes sowie wulstartig ausgebildetes Ende in der Umbiegung anordenbar ist, hindurchgezogen werden kann. Um einem leichten Lösen des Schließbandes vom Zwischenstück entgegenzuwirken, kann das geringfügig breiter als der Schlitz ausgebildete Schließband angrenzend an das wulstartige Ende Einkerbungen aufweisen, in welche die Seitenränder des Schlitzes eingreifen.

Ferner können am freien Ende des Zwischenstückes hakenförmige Krallen ausgebildet sein, die in Löcher im am Handschuh zu befestigenden Ende des Schließbandes eingreifen.

Es hat sich auch bewährt, in das freie Ende des Zwischenstückes einen Schlitz einzuarbeiten, durch welchen das am Handschuh zu befestigende Ende des Schließbandes hindurchgeführt werden kann. Zum Befestigen des Schließbandes am Zwischenstück wird dieses Ende in Richtung des Schließbandes umgebogen und am Schließband mit mindestens einem Niet oder einer Schraube gehalten. Das im Schlitz des Zwischenstückes anordenbare Ende des Schließbandes kann, insbesondere bei einem Schließband aus Kunststoff, als Haken ausgebildet sein. Die Nase des Hakens kann dabei zur Handschuhinnenseite weisen und mindestens einen Dorn oder Vorsprung tragen, der bei geschlossenem Handschuh und den sich dabei überlappenden Randbereichen des Schlitzes in das darunter liegende Ringgeflecht eingreift. Dadurch wird das im Bereich des Schlitzes übereinander liegende Ringgeflecht gegen Verschieben stabilisiert. Anstatt mit einem Haken kann das zu befestigende Ende des Schließbandes mit einem Kopf oder pilzförmigen Ansatz versehen sein, der im Bereich des Randes des Schlitzes am Zwischenstück anliegt und somit das Schließband am Zwischenstück festhält. Die dem Schließband gegenüber liegende Fläche des Kopfes oder pilzförmigen Ansatzes kann noch mindestens einen Dorn oder Vorsprung aufweisen.

Ausführungsbeispiele der Erfindung werden im folgenden noch an Hand der Zeichnungen erläutert, in denen Zwischenstücke mit den zugehörigen Schließbändern vor deren Montage dargestellt sind.

Angrenzend an den Schlitz des Schlupfloches eines Schutzhandschuhes ist an dessen Metallgeflecht 1 mit Ringen 2 ein Zwischenstück 3 gehalten, an welchem ein Ende 4 eines Schließbandes 5 anzubringen ist. Das Schließband 5, das aus Kunststoff, einem Textilgeflecht oder einem flexiblen Metallband bestehen kann, trägt an seinem freien Ende eine an sich bekannte Druckknopfschnalle 6.

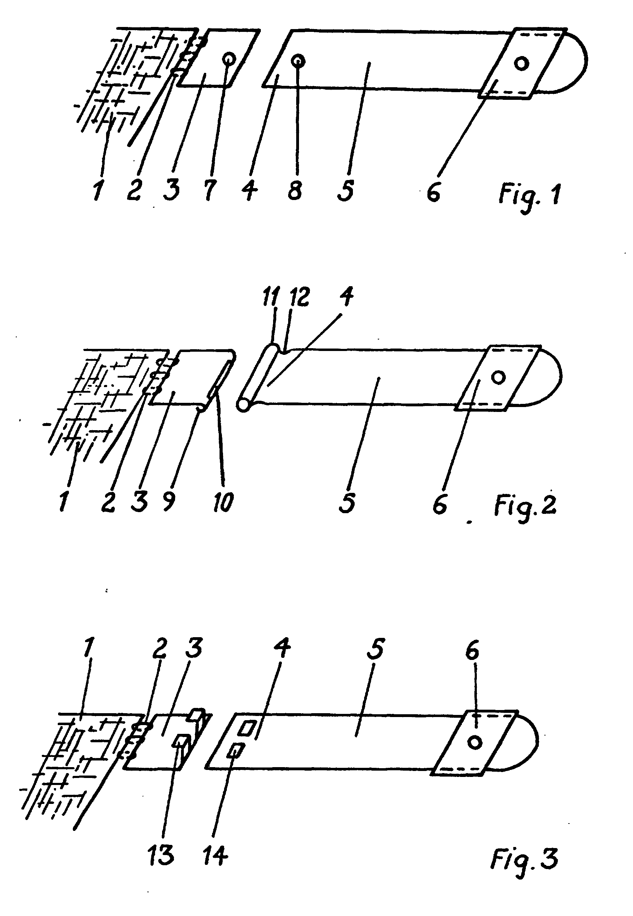

Bei der in Fig. 1 gezeigten Ausführungsform der Erfindung sind in das Zwischenstück 3 und das Schließband 5 je eine Bohrung 7 bzw. 8 eingearbeitet. Durch diese Bohrungen 7 und 8 kann sich ein Niet oder eine Schraube (nicht dargestellt) zum Verbinden des Zwischenstückes 3 mit dem Schließband 5 erstrecken.

In Fig. 2 ist eine Ausgestaltung der Erfindung dargestellt, bei der das freie Ende des Zwischenstückes 3 eine Umbiegung 9 mit einem Schlitz 10 aufweist, durch welchen das Schließband 5 hindurchzuziehen ist. An das am Zwischenstück 3 zu befestigende Ende 4 des Schließbandes 5 ist eine Wulst 11 angeformt, die in der Umbiegung 9 anordenbar ist und das Schließband 5 am Zwischenstück 3 hält. Um einem unerwünschten Lösen des Schließbandes 5 vom Zwischenstück 3 entgegenzuwirken, ist das Schließband 5 geringfügig breiter als der Schlitz 10 und weist angrenzend an die Wulst 11 Einkerbungen 12 auf, in welche die Seitenränder des Schlitzes 10 eingreifen, wenn die Wulst 11 in der Umbiegung 9 liegt. Die Wulst 11 kann auch durch mehrfaches Falten und Zusammenhalten, z. B. durch Nähen des Endes 4 des Schließbandes 5, erhalten werden (nicht dargestellt).

Zum Verbinden des Zwischenstückes 3 mit dem Schließband 5 können am Zwischenstück 3 auch hakenförmige Krallen 13 ausgebildet sein, die in Löcher 14 im Ende 4 des Schließbandes 5 einhakbar sind (Fig. 3).

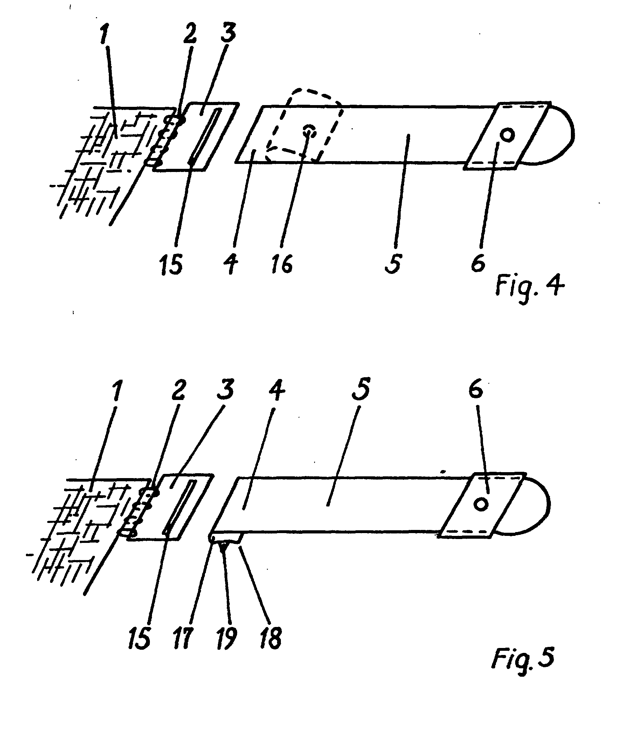

Eine andere Möglichkeit zum lösbaren Befestigen des Schließbandes 5 am Zwischenstück 3 veranschaulicht Fig. 4. Im flachen Zwischenstück 3 ist angrenzend an seinem freien Rand ein Schlitz 15 ausgebildet, durch welchen das Ende 4 des Schließbandes 5 hindurchzustecken ist. Zum Verbinden des Zwischenstückes 3 mit dem Schließband 5 wird dessen aus dem Schlitz 15 herausragendes Ende 4 in Richtung des Schließbandes 5 umgebogen - wie es gestrichelt dargestellt ist - und am Schließband 5 mit einem Niet oder einer Schraube (nicht gezeigt), der bzw. die sich durch eine Bohrung 16 erstreckt, gehalten.

Eine von der in Fig. 4 gezeigten Verbindung des Schließbandes 5 mit dem Schlitz 15 im Zwischenstück 3 abweichende Form ist in Fig. 5 wiedergegeben. Hierbei ist das Ende 4 des Schließbandes 5 als Haken 17 ausgebildet, der von unten d. h. der Handschuhinnenseite, in den Schlitz 15 einzuführen und einzuhaken ist und dessen Nase 18 auf der vom Zwischenstück 3 entfernten Seite mindestens einen Dorn oder Vorsprung 19 trägt. Anstatt des Hakens 17 kann an das Ende 4 des Schließbandes 5 ein Kopf oder pilzförmiger Ansatz (nicht gezeigt) angeformt sein, der im Randbereich des Schlitzes 15 am Zwischenstück 3 anliegt und an seiner freien Fläche mit Vorsprüngen oder Dornen 19 versehen sein kann.

Die Erfindung ist nicht auf die dargestellten oder beschriebenen Ausführungsbeispiele begrenzt. Sie schließt für den Fachmann geläufige Abwandlungen ein. So können insbesondere an Handschuhen mit Stulpen mehrere erfindungsgemäße Zwischenstücke mit auswechselbarem Schließband angebracht sein, um den Schlitz in der Stulpe und dem Handschuh zu verschließen. Es ist auch möglich, diese Zwischenstücke bei Schutzhandschuhen einzusetzen, deren Schlupfloch und/oder Stulpe eine solche Abmessung haben, daß ein Schlitz im Bereich des Schlupfloches oder in der Stulpe zum leichten Anziehen des Handschuhes entbehrlich ist. Das Zwischenstück wird dabei auf der Außenseite am Ringgeflecht angebracht, so daß bei angezogenem Handschuh durch das Befestigen des freien Endes des Schließbandes am Handschuh und/oder der Stulpe im Haltebereich des Zwischenstückes am Ringgeflecht eine S-förmige Falte oder Überlappung entsteht, wodurch unterhalb des Zwischenstückes und des Schließbandes das Ringgeflecht in drei Lagen übereinander liegt.

## Patentansprüche

1. Schutzhandschuh, der aus einem vorzugsweise metallischen Ringgeflecht (1) besteht und im Handgelenkbereich einen vom Schlupfloch ausgehenden sowie sich in Richtung zu den Fingern erstreckenden Schlitz (10, 15) aufweist, der von einem Schließband (5) überbrückt wird, dessen eines Ende (4) am Handschuh befestigt und dessen anderes Ende lösbar mit der Außen- oder Oberseite des Handschuhes verbindbar ist, **gekennzeichnet durch** ein fest am Handschuh angebrachtes Zwischenstück (3), an dem das am Handschuh zu befestigende Ende (4) des Schließbandes (5) austauschbar angeordnet ist.

2. Schutzhandschuh, der aus einem vorzugsweise metallischen Ringgeflecht (1) besteht und im Handgelenkbereich eine vom Schlupfloch ausgehende sowie sich in Richtung zu den Fingern erstreckende S-förmige Falte als geschlossene Überlappung aufweist, die von einem Schließband (5) überbrückt wird, dessen eines Ende (4) am Handschuh befestigt und dessen anderes Ende lösbar mit der Außen- oder Oberseite des Handschuhes verbindbar ist, **gekennzeichnet durch** ein fest am Handschuh angebrachtes Zwischenstück (3), an dem das am Handschuh zu befestigende Ende (4) des Schließbandes (5) austauschbar angeordnet ist.

3. Schutzhandschuh nach Anspruch 1 oder 2, **dadurch gekennzeichnet, daß** das Zwischenstück (3) aus Metall und/oder Kunststoff besteht.

4. Schutzhandschuh nach einem der vorhergehenden Ansprüche, **dadurch gekennzeichnet, daß** das Zwischenstück (3) am Ringgeflecht (1) des Schutzhandschuhes mit Ringen (2) gehalten ist.

5. Schutzhandschuh nach einem der vorhergehenden Ansprüche, **dadurch gekennzeichnet, daß** das Zwischenstück (3) mindestens eine Bohrung (7) als Aufnahme für einen Niet oder eine Schraube, die sich durch das zu befestigende Ende (4) des Schließbandes (5) erstreckt, aufweist.

6. Schutzhandschuh nach einem der Ansprüche 1 bis 4, **dadurch gekennzeichnet, daß** das freie Ende des Zwischenstückes (3) eine Umbiegung (9) mit einem Schlitz (10) aufweist, durch welchen das Schließband (5), dessen am Handschuh zu befestigendes sowie mit einer Wulst (11) versehene Ende (4) in der Umbiegung (9) anordenbar ist, hindurchziehbar ist.

7. Schutzhandschuh nach Anspruch 6, **dadurch gekennzeichnet, daß** das Schließband (5) geringfügig breiter als der Schlitz (10) ist und angrenzend an die Wulst (11) Einkerbungen (12) aufweist.

8. Schutzhandschuh nach einem der Ansprüche 1 bis 4, **dadurch gekennzeichnet, daß** am freien Ende des Zwischenstückes (3) hakenförmige Krallen (13) ausgebildet sind, die in Löcher (14) im am Handschuh zu befestigenden Ende (4) des Schließbandes (5) einhakbar sind.

9. Schutzhandschuh nach einem der Ansprüche 1 bis 4, **dadurch gekennzeichnet, daß** in das freie Ende des Zwischenstückes (3) ein Schlitz (15) eingearbeitet ist, durch welchen das am Handschuh zu befestigende Ende (4) des Schließbandes (5) hindurchführbar ist.

10. Schutzhandschuh nach Anspruch 9, **dadurch gekennzeichnet, daß** das durch den Schlitz (15) hindurchgeführte Ende (4) des Schließbandes (5) in Richtung des Schließbandes (5) umgebogen und mit mindestens einem Niet oder einer Schraube am Schließband (5) gehalten ist.

11. Schutzhandschuh nach Anspruch 9, **dadurch gekennzeichnet, daß** das am Schlitz (15) zu haltende Ende (4) des Schließbandes (5) als Haken (17) ausgebildet ist.

12. Schutzhandschuh nach Anspruch 11, **dadurch gekennzeichnet, daß** die Nase (18) des Hakens (17) mindestens einen Dorn (19) oder Vorsprung (19) aufweist.

13. Schutzhandschuh nach Anspruch 9, **dadurch gekennzeichnet, daß** das am Schlitz (15) zu haltende Ende (4) des Schließbandes (5) mit einem Kopf oder pilzförmigen Ansatz versehen ist.

14. Schutzhandschuh nach Anspruch 13, **dadurch gekennzeichnet, daß** die dem Schließband (5) gegenüberliegende freie Fläche des Kopfes oder Ansatzes mindestens einen Dorn oder Vorsprung aufweist.

## Claims

1. Protective glove consisting of a preferably metallic ring interlaced material (1) and in the wrist region comprising a slit (10, 15) issuing from the entrance hole and extending in the direction of the fingers, the slit being bridged by a fastening band (5), the one end (4) of which is fastened to the glove and the other end of which can be detachably connected to the outer or upper side of the glove, **characterised by** an intermediate piece (3) firmly attached to the glove and on which the end (4) of the fastening band (5) to be fastened to the glove is replaceably arranged.

2. Protective glove consisting of a preferably metallic ring interlaced material (1) and in the wrist region comprising an S-shaped fold as a closed overlap which issues from the entrance hole and extends in the direction of the fingers, the fold being bridged by a fastening band (5), the one end (4) of which is fastened to the glove and the other end of which can be detachably connected to the outer or upper side of the glove, **characterised by** an intermediate piece (3) firmly attached to the glove and on which the end (4) of the fastening band (5) to be fastened to the glove is replaceably arranged.

3. Protective glove according to claim 1 or 2, **characterised in that** the intermediate piece (3) consists of metallic and/or plastics material.

4. Protective glove according to any of the preceding claims, **characterised in that** the intermediate piece (3) is held on the ring interlaced material (1) of the protective glove by rings (2).

5. Protective glove according to any of the preceding claims, **characterised in that** the intermediate piece (3) has at least one hole (7) as a receiver for a rivet or a screw extending through the end (4) of the fastening band (5) to be fastened.

6. Protective glove according to any of claims 1 to 4, **characterised in that** the free end of the intermediate piece (3) has a bent part (9) with a slit (10) through which the fastening band (5), the end (4) of which to be fastened to the glove and provided with a bead (11) can be arranged in the bent part (9), can be pulled.

7. Protective glove according to claim 6, **characterised in that** the fastening band (5) is slightly wider than the slit (10) and has notches (12) adjoining the bead (11).

8. Protective glove according to any of claims 1 to 4, **characterised in that** hook-shaped claws (13), which can hook in holes (14) in the end (4) of the fastening band (5) to be fastened to the glove, are formed on the free end of the intermediate piece (3).

9. Protective glove according to any of claims 1 to 4, **characterised in that** a slit (15) is worked into the free end of the intermediate piece (3) through which the end (4) of the fastening band (5) to be fastened to the glove can be guided.

10. Protective glove according to claim 9, **characterised in that** the end (4) of the fastening band (5) guided through the slit (15) is bent in the direction of the fastening band (5) and is held by at least one rivet or one screw on the fastening band (5).

11. Protective glove according to claim 9, **characterised in that** the end (4) of the fastening band (5) to be held at the slit (15) is designed as a hook (17).

12. Protective glove according to claim 11, **characterised in that** the nose (18) of the hook (17) has at least one mandrel (19) or projection (19).

13. Protective glove according to claim 9, **characterised in that** the end (4) of the fastening band (5) to be held at the slit (15) is provided with a head or mushroom-shaped appendage.

14. Protective glove according to claim 13, **characterised in that** the free face of the head or appendage opposing the fastening band (5) has at least one mandrel or projection.

## Revendications

1. Gant de protection qui se compose d'un tissage annulaire (1), de préférence métallique, et qui comporte dans la région du poignet une fente (10, 15) partant de l'ouverture et s'étendant en direction des doigts, fente par-dessus laquelle s'étend une bande de fermeture (5) dont une extrémité (4) est fixée au gant et dont l'autre extrémité peut être reliée de façon amovible à la face extérieure ou supérieure du gant, **caractérisé en ce qu'**une pièce intermédiaire (3) est montée fixe sur le gant, l'extrémité (4) de la bande de fermeture à fixer au gant étant agencée de façon permutable sur ladite pièce intermédiaire.

2. Gant de protection qui se compose d'un tissage annulaire (1), de préférence métallique, et qui comporte dans la région du poignet un pli en forme de S servant de rabat fermé, partant de l'ouverture et s'étendant dans la direction des doigts, pli par-dessus lequel s'étend une bande de fermeture (5) dont une extrémité (4) est fixée au gant et dont l'autre extrémité peut être reliée de façon amovible à la face extérieure ou supérieure du gant, **caractérisé en ce qu'**une pièce intermédiaire (3) est montée fixe sur le gant, l'extrémité (4) de la bande de fermeture à fixer au gant étant agencée de façon permutable sur ladite pièce intermédiaire.

3. Gant selon la revendication 1 ou 2, **caractérisé en ce que** la pièce intermédiaire (3) est en métal et/ou en matière plastique.

4. Gant selon l'une des revendications précédentes, **caractérisé en ce que** la pièce intermédiaire (3) est maintenue au niveau du tissage annulaire (1) du gant de protection au moyen d'anneaux (2).

5. Gant de protection selon l'une des revendications précédentes, **caractérisé en ce que** la pièce intermédiaire (3) comporte au moins un perçage (7) servant de logement pour un rivet ou une vis, lequel perçage s'étend à travers l'extrémité (4), à fixer, de la bande de fermeture (5).

6. Gant de protection selon l'une des revendications 1 à 4, **caractérisé en ce que** l'extrémité libre de la pièce intermédiaire (3) comporte un repli (9) présentant une fente (10) à travers laquelle on peut faire passer la bande de fermeture (5) dont l'extrémité (4) à fixer au gant et dotée également d'un bourrelet (11) est agencée dans le repli (9).

7. Gant de protection selon la revendication 6, **caractérisé en ce que** la bande de fermeture (5) est légèrement plus large que la fente (10), et comporte près du bourrelet (11) des rainures (12).

8. Gant de protection selon l'une des revendications 1 à 4, **caractérisé en ce que** à l'extrémité libre de la pièce intermédiaire (3) sont conformées des griffes (13) en forme de crochets, lesquels peuvent s'accrocher dans des trous (14) ménagés dans l'extrémité (4) de la bande de fermeture (5) à fixer au poignet.

9. Gant de protection selon l'une des revendications 1 à 4, **caractérisé en ce que** dans l'extrémité libre de la pièce intermédiaire (3) est ménagée une fente (15) à travers laquelle on peut faire passer l'extrémité (4), à fixer au gant, de la bande de fermeture (5).

10. Gant de protection selon la revendication 9, **caractérisé en ce que** l'extrémité (4), passée à travers la fente (15), de la bande de fermeture (5) est pliée en direction de la bande de fermeture (5), et est maintenue au moyen d'un rivet ou d'une vis à la bande de fermeture (5).

11. Gant de protection selon la revendication 9, **caractérisé en ce que** l'extrémité (4) de la bande de fermeture (5) qui doit être maintenue à la fente (15) est conformée en crochet (17).

12. Gant de protection selon la revendication 11, **caractérisé en ce que** le bout (18) du crochet (17) comporte au moins un ergot (19) ou une saillie (19).

13. Gant de protection selon la revendication 9, **caractérisé en ce que** l'extrémité (4) de la bande de fermeture (5) qui doit être maintenue sur la fente (15) est dotée d'une tête ou d'un téton fongiforme.

14. Gant selon la revendication 13, **caractérisé en ce que** la face libre, opposée à la bande de fermeture (5), de la tête ou du téton comporte au moins un ergot ou une saillie.
